(19)

Europäisches
Patentamt
European
Patent Office
Office européen
des brevets

(11) **EP 4 712 161 A1**

(12) **EUROPEAN PATENT APPLICATION**

(43) Date of publication:
**18.03.2026 Bulletin 2026/12**

(21) Application number: **25201934.4**

(22) Date of filing: **12.09.2025**

(51) International Patent Classification (IPC):
*H01M 4/36* (2006.01)      *H01M 4/505* (2010.01)
*H01M 4/525* (2010.01)     *H01M 4/62* (2006.01)
*H01M 10/0525* (2010.01)

(52) Cooperative Patent Classification (CPC):
**H01M 4/505; H01M 4/366; H01M 4/525;
H01M 4/62; H01M 4/625; H01M 4/628;
H01M 10/0525;** Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.09.2024   CN 202411287384**

(71) Applicants:
• **Guizhou Zhenhua E-CHEM Inc.**
**Guiyang City, Guizhou Province 550014 (CN)**
• **Guizhou Zhenhua E_CHEM Co., Ltd.**
**Guiyang City, Guizhou Province 550014 (CN)**
• **Guizhou Zhenhua Yilong E-CHEM Co., Ltd**
**Southwest Guizhou, Autonomous Prefecture
552401 (CN)**

(72) Inventors:
• **HUANG, Jin**
**Guiyang City, Guizhou Province, 550014 (CN)**
• **YU, Ye**
**Giyang City, Guizhou Province, 550014 (CN)**
• **HU, Ansheng**
**Guiyang City, Guizhou Province, 550014 (CN)**
• **YU, Hu**
**Guiyang City, Guizhou Province, 550014 (CN)**
• **DENG, Shiyun**
**Guiyang City, Guizhou Province, 550014 (CN)**

(74) Representative: **Bardehle Pagenberg
Partnerschaft mbB
Patentanwälte Rechtsanwälte
Prinzregentenplatz 7
81675 München (DE)**

(54) **CARBON-COATED FAST-IONIC CONDUCTOR-MODIFIED POSITIVE ELECTRODE MATERIAL AND PREPARATION METHOD THEREFOR**

(57)     The present disclosure provides a carbon-coated fast-ionic conductor-modified positive electrode material and a preparation method therefor. The positive electrode material has a chemical general formula of $Li_aNi_xCo_yMn_zO_2 \cdot cA \cdot dB$, where $1.00 \leq a \leq 1.20$, $0.00 < c \leq 0.01$, $0.00 < d \leq 0.02$, $0.00 \leq x < 1.00$, $0.00 \leq y < 0.2$, $0.00 \leq z < 0.4$, and $x + y + z = 1$; A is a first coating material, and B is a second coating material; and the first coating material A is a carbon-coated fast-ionic conductor, and the second coating material B is a carbon escape-prevention compound. According to the present disclosure, a fast-ionic conductor modified through carbon coating is used to modify a positive electrode material, such that the ionic conductivity and the electronic conductivity of the positive electrode material are synchronously improved. In addition, the surface of the carbon-coated fast-ionic conductor is coated with boric acid due to the glassy property, such that the escape of carbon in the carbon-coated fast-ionic conductor is effectively prevented. Therefore, the present disclosure synchronously improves the ionic conductivity and the electronic conductivity of the positive electrode material, and also improves the safety of the battery.

FIG. 1

## Description

## TECHNICAL FIELD

The present disclosure relates to the technical field of lithium-ion batteries, and in particular, to a carbon-coated fast-ionic conductor-modified positive electrode material and a preparation method therefor.

## BACKGROUND

Lithium-ion batteries have become an indispensable part of the energy economy in the 21st century. However, safety still remains the most critical problem in the application of lithium-ion batteries in the field of large batteries, such as automobiles and energy storage. The volatile, flammable, and explosive organic electrolytic solution is the main factor causing the safety problem of lithium-ion batteries. Therefore, using fast-ionic conductor solid electrolytes to replace the electrolytic solution to develop all-solid-state lithium-ion batteries is an effective way to solve the safety problem of batteries.

At present, since all-solid-state batteries have not been commercialized, new applications for fast-ionic conductors have been proposed, such as being applied on the surface of a positive electrode material to inhibit side reactions of the positive electrode material and the electrolytic solution, thereby improving the safety of the battery system. This concept has been the focus of many studies at present. In a conventional process, a fast-ionic conductor is applied and then stabilized on the surface of a positive electrode material through a sintering process. However, this poses a new problem. The fast-ionic conductor is a good ion-conducting material, but the poor electronic conductivity makes the fast-ionic conductor essentially an electronic insulator, which also poses difficulties to the simple coating of the fast-ionic conductor.

## SUMMARY

To overcome the defects in the prior art, the present disclosure provides a carbon-coated fast-ionic conductor-modified positive electrode material and a preparation method therefor. According to the method, a fast-ionic conductor modified through carbon coating is used to modify a positive electrode material, and the surface of the carbon-coated fast-ionic conductor is coated with boric acid due to the glassy property, such that the escape of carbon in the carbon-coated fast-ionic conductor is effectively prevented, and the ionic conductivity and the electronic conductivity of the positive electrode material are synchronously improved.

Technical solutions of the present disclosure: Provided is a carbon-coated fast-ionic conductor-modified positive electrode material, having a chemical general formula of $Li_aNi_xCo_yMn_zO_2 \cdot cA \cdot dB$, where $1.00 \leq a \leq 1.20$, $0.00 < c \leq 0.01$, $0.00 < d \leq 0.02$, $0.00 \leq x < 1.00$, $0.00 \leq y < 0.2$, $0.00 \leq z < 0.4$, and $x + y + z = 1$; A is a first coating material, and B is a second coating material; and the first coating material A is a carbon-coated fast-ionic conductor, and the second coating material B is a carbon escape-prevention compound.

Preferably, the carbon escape-prevention compound is in a glass state, a molten state, or a liquid state at 250-450 °C and is in a solid state at room temperature.

Preferably, the carbon escape-prevention compound is boric acid.

Preferably, the fast-ionic conductor is LATP or LLZO.

Preferably, the positive electrode material includes less than 1500 ppm by mass of total free lithium.

Preferably, the carbon-coated fast-ionic conductor-modified positive electrode material has a specific surface area of 0.5-1.2 $m^2/g$.

Preferably, the positive electrode material has an average particle size of 2-5 $\mu m$.

A second objective of the present disclosure is to provide a positive electrode material for a lithium-ion battery, where the positive electrode active substance includes the carbon-coated fast-ionic conductor-modified positive electrode material described above.

A third objective of the present disclosure is to provide a lithium-ion battery including the positive electrode material for a lithium-ion battery described above.

A fourth objective of the present disclosure is to provide an electric device including the lithium-ion battery described above, where the lithium-ion battery is used to provide electric energy.

A fifth objective of the present disclosure is to provide a preparation method for a carbon-coated fast-ionic conductor-modified positive electrode material, including the following steps:

step 1: mixing a ternary positive electrode material, a carbon-coated fast-ionic conductor, and a carbon escape-prevention compound in a mass ratio of 1.0:(0.001-0.02):(0.006-0.01), and then subjecting the mixture to ball milling; and

step 2: putting the ball-milled material into a muffle furnace, and heating the material to 250-450 °C at a heating rate of 5 °C/min and then sintering the material for 6 h under air atmosphere, thereby obtaining the carbon-coated fast-ionic conductor-modified positive electrode material.

Preferably, the carbon escape-prevention compound is boric acid.

According to the above technical solutions, the present disclosure has the following advantages:

1. According to the present disclosure, the use of the carbon-coated fast-ionic conductor-modified positive electrode material improves the ionic conductivity and the electronic conductivity of the positive electrode material synchronously and improves the performance of the battery.

2. According to the present disclosure, boric acid is used for simultaneous coating, which solves the problem of carbon escape in the coating process.

3. According to the present disclosure, the involved positive electrode material for a lithium-ion battery improves the safety performance of the battery through double coating modification.

## BRIEF DESCRIPTION OF THE DRAWINGS

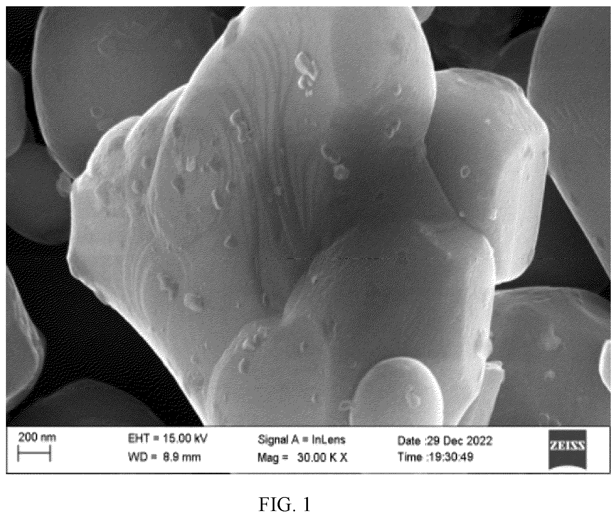

FIG. 1 shows a SEM image of a carbon-coated fast-ionic conductor-modified positive electrode material according to the present disclosure; and

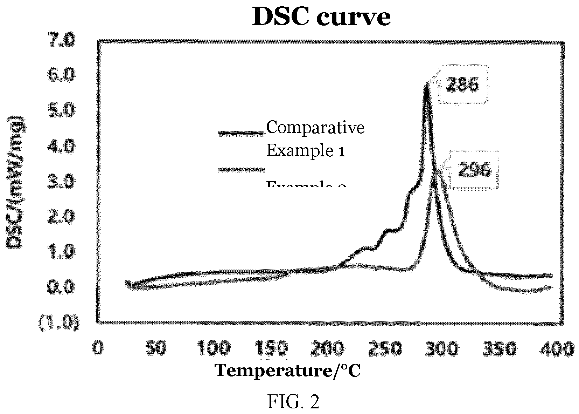

FIG. 2 shows DSC curve graphs of Example 2 and Comparative Example 1.

## DETAILED DESCRIPTION

To better understand the technical solutions of the examples of the present application, the following detailed description is provided in combination with some preferred examples.

In this specification, amounts, ratios, and other numerical values are sometimes presented herein in range formats. It should be understood that such range formats are used for convenience and brevity, and should be flexibly interpreted to include not only the numerical values explicitly specified as the limits of ranges, but also all the individual numerical values or sub-ranges encompassed within the ranges as if each numerical value and sub-range is explicitly specified.

The carbon-coated fast-ionic conductor-modified positive electrode material provided in the present application has a chemical general formula of $Li_aNi_xCo_yMn_zO_2 \cdot cA \cdot dB$, where $1.00 \leq a \leq 1.20$, $0.00 < c \leq 0.01$, $0.00 < d \leq 0.02$, $0.00 \leq x < 1.00$, $0.00 \leq y < 0.2$, $0.00 \leq z < 0.4$, and $x + y + z = 1$; A is a first coating material, and B is a second coating material; and the first coating material A is a carbon-coated fast-ionic conductor, and the second coating material B is a carbon escape-prevention compound.

Preferably, the carbon escape-prevention compound is in a glass state, a molten state, or a liquid state at 250-450 °C and is in a solid state at room temperature.

Preferably, the carbon escape-prevention compound is boric acid.

Preferably, the fast-ionic conductor is LATP or LLZO.

Preferably, the positive electrode material includes less than 1500 ppm by mass of total free lithium.

Preferably, the carbon-coated fast-ionic conductor-modified positive electrode material has a specific surface area of 0.5-1.2 $m^2/g$.

Preferably, the positive electrode material has an average particle size of 2-5 $\mu m$.

A second objective of the present disclosure is to provide a positive electrode material for a lithium-ion battery, where the positive electrode active substance includes the carbon-coated fast-ionic conductor-modified positive electrode material described above.

A third objective of the present disclosure is to provide a lithium-ion battery including the positive electrode material for a lithium-ion battery described above.

A fourth objective of the present disclosure is to provide an electric device including the lithium-ion battery described above, where the lithium-ion battery is used to provide electric energy.

The lithium-ion battery of the present disclosure is composed of an electrode, a nonaqueous electrolyte, a separator, and a container. Specifically, the electrode includes a positive electrode and a negative electrode. The positive electrode is made from materials including a positive electrode current collector, a positive electrode active substance applied to the positive electrode current collector, a conventional binder, a conventional conductive additive, and the like. The positive electrode active substance is the lithium-ion positive electrode material of the present disclosure. The negative electrode is made from materials including a current collector, a conventional negative electrode active substance applied to the current collector, a conventional binder, a conventional conductive additive, and the like. The separator is a PP/PE film conventionally used in the art, which serves to separate the positive electrode from the negative electrode. The container is an inclusion of the positive electrode, the negative electrode, the separator, and an electrolyte.

A fifth objective of the present disclosure is to provide a preparation method for a carbon-coated fast-ionic conductor-modified positive electrode material, including the following steps:

step 1: mixing a ternary positive electrode material, a carbon-coated fast-ionic conductor, and a carbon escape-prevention compound in a mass ratio of 1.0:(0.001-0.02):(0.006-0.01), and then subjecting the mixture to ball milling; and

step 2: putting the ball-milled material into a muffle furnace, and heating the material to 250-450 °C at a heating rate of 5 °C/min and then sintering the material for 6 h under air atmosphere, thereby obtaining the carbon-coated fast-ionic conductor-modified positive electrode material.

Preferably, the carbon escape-prevention compound is boric acid.

The carbon-coated fast-ionic conductor-modified positive electrode material, and the preparation method therefor and use thereof according to the present disclosure will be described below with reference to specific examples. The reagents and devices not described in the present application are all contents that can be conventionally confirmed by those of ordinary skill in the art.

The reagents used in the examples below are shown in Table 1.

Table 1. Information on reagents used in examples of the present disclosure

| Reagent | Grade | Model number | Manufacturer |
|---|---|---|---|
| Nickel-cobalt-manganese matrix | Ni:Co:Mn 50:20:30 | Particle size: 4 $\mu$m, and chemical formula: $LiNi_{0.5}Co_{0.2}Mn_{0.3}O_2$ | Guizhou Zhen-hua E-chem Co., Ltd. |
| Nickel-cobalt-manganese matrix | Ni:Co:Mn 60:10:30 | Particle size: 4 $\mu$m, and chemical formula: $LiNi_{0.6}Co_{0.1}Mn_{0.3}O_2$ | Guizhou Zhen-hua E-chem Co., Ltd. |
| Nickel-cobalt-manganese matrix | Ni:Co:Mn 70:10:20 | Particle size: 4 $\mu$m, and chemical formula: $LiNi_{0.7}Co_{0.1}Mn_{0.2}O_2$ | Guizhou Zhen-hua E-chem Co., Ltd. |
| Nickel-cobalt-manganese matrix | Ni:Co:Mn 83:07:10 | Particle size: 4 $\mu$m, and chemical formula: $LiNi_{0.83}Co_{0.07}Mn_{0.1}oO_2$ | Guizhou Zhen-hua E-chem Co., Ltd. |
| Nickel-cobalt-manganese matrix | Ni:Co:Mn = 92:5:3 | Particle size: 4 $\mu$m, and chemical formula: $LiNi_{0.92}Co_{0.05}Mn_{0.03}O_2$ | Guizhou Zhen-hua E-chem Co., Ltd. |
| Carbon-coated fast-ionic conductor | | / | Guizhou Zhenhua E-chem Co., Ltd. |
| Boric acid | Chemically pure | 99.5wt% | Aladdin |
| Methyl Red | Chemically pure | 99.5wt% | Tianjin Guangfu Technology Development Co., Ltd. |
| Phenolphthalein | Chemically pure | 99.9wt% | Chengdu Jinshan Chemical Reagent Co., Ltd. |
| HCL | Chemically pure | 99.9wt% | Xilong Scientific Co., Ltd., Sichuan |

(continued)

| Reagent | Grade | Model number | Manufacturer |
|---|---|---|---|
| High-purity oxygen | Industrial grade | Purity: 99.95% | Shenzhen Nanshan Gas Station |
| Conductive carbon black | Battery grade | Super P Li | TIMCAL Graphite & Carbon, Switzerland |
| N-Methylpyrrolidone | Battery grade | Content: 99.5% | Nanjing Jinlong Chemical Factory, Jiangsu |
| Polyvinylidene fluoride | Battery grade | Solef 6020 | Solvay Chemicals, Inc., USA |
| Aluminum foil | Battery grade | Thickness: 16 $\mu$m | Aluminum Company of America |
| Electronic tape | Electronic grade | Green, width: 10 mm | Minnesota Mining and Manufacturing Company, USA |
| Lithium foil | Electronic grade | Diameter: $\Phi$20 mm, and purity: $\geq$ 99.9% | Shanghai Shunyou Metal Material Co., Ltd. |
| Electrolytic solution | Electronic grade | Mixed solvent: dimethyl carbonate (DMC):ethylene carbonate (EC):diethyl carbonate (DEC) = 1:1:1 (mass ratio), and electrolyte: lithium hexafluorophosphate; concentration of lithium hexafluorophosphate in the electrolytic solution: 1 mol/L | Shenzhen Capchem Technology Co., Ltd. |
| Separator | ---- | Three-layer material of PP/PE/PP, Celgard M825, thickness: 16 $\mu$m. | Celgard, LLC, USA |
| Aluminum-plastic film | Industrial grade | Total thickness: 160 $\mu$m | Dai Nippon Printing Co., Ltd., Japan |

The devices and analytical methods used in the following examples were as follows: The specific surface area was analyzed and detected using a fully automated surface area and porosity analyzer (TriStar II 3020 from Micromeritics, USA).

The test method for free lithium in the positive electrode material was as follows: A proper amount of the sample, m grams (about 30 g), was accurately weighed (rounded to 0.01 g). The sample was put into a 250 mL conical flask, followed by a magnetic stirring bar, and 100 mL of deionized water was added. The conical flask was placed on a magnetic stirrer, and the stirrer was turned on to stir for 30 min. The mixed solution was filtered through filter paper and a funnel. 50 mL of the filtrate was pipetted using a 50 mL pipette, and put into a 100 mL beaker, followed by a magnetic stirring bar. The beaker was placed on a magnetic stirrer, and 2 drops of phenolphthalein indicator were added. The solution was titrated with a 0.05 mol/L hydrochloric acid standard titration solution until the color of the solution changed from red to colorless. The volume V1 of the 0.05 mol/L hydrochloric acid standard titration solution was recorded (endpoint 1). Then, 2 drops of methyl red indicator were added, and the color changed from colorless to yellow. The solution was titrated with the 0.05 mol/L hydrochloric acid standard titration solution until the color of the solution changed from yellow to orange. The beaker was placed on a heating furnace and heated until the solution boiled (the color of the solution changed from orange to yellow). The 100 mL beaker was removed and cooled to room temperature. The beaker was placed on the magnetic stirrer again. The solution was titrated with the 0.05 mol/L hydrochloric acid standard titration solution until the color of the solution changed from yellow to light red. The volume V2 of the 0.05 mol/L hydrochloric acid standard titration solution was recorded (endpoint 2).

$$\text{Lithium hydroxide: LiOH (wt\%)} = [V2 - 2 \times (V2 - V1)] \times 0.05 \times 23.946 \times 2 \times 100/(m \times 1000)$$

Lithium carbonate:

$$\text{Li}_2\text{CO}_3 \text{ (wt\%)} = (V2 - V1) \times 0.05 \times 73.886 \times 2 \times 100/(m \times 1000)$$

Free lithium:

$$\text{Li}^+ \text{ (wt\%)} = V2 \times 0.05 \times 6.94 \times 2 \times 100/(m \times 1000)$$

Here, m represents the mass of the sample in g; V1 represents the first titration endpoint; V2 represents the second titration endpoint.

Average particle size test: The test was performed using the MS3000 laser particle analyzer, with the procedures as follows:

A proper amount of sample was taken and added into a 100 mL beaker. First, the beaker was rinsed along the inner wall with a wash bottle, and then the sample adhered to the bottom of the beaker was rinsed with the wash bottle, with the amount of pure water added into the beaker controlled at 20-30 mL. The mixture was ultrasonicated for 5 min (stirring for 10 s before, during, and after the ultrasonication, with a stirring speed of about 2 r/s). 100 ± 10 mL of pure water was added into a sample injector of the MS3000 laser particle analyzer, and the rotation speed was adjusted to 3000 r/min before clicking on the start. The analyzer automatically performed optical alignment and background measurement, and then waited for the prompts for further operations. The ultrasonicated sample was transferred into a stirring tank, and then the beaker was rinsed with the wash bottle to ensure complete transfer of the sample. Once the sample was fully added, the software automatically began the measurement. After the measurement was complete, the data were automatically saved.

DSC test method: The test was performed using STA449F3 under nitrogen atmosphere with a heating rate of 10 °C/min and a cut-off temperature of 400 °C.

Resistivity test: The resistivity was tested using Suzhou Jingge ST-2255 with a pressure of 50 Mpa and a sample amount of 5 g.

In the following examples, the method for preparing a full battery (the battery cell model number: 454261) using the positive electrode material prepared by the present disclosure was as follows:

Preparation of a positive electrode: The positive electrode material of the present disclosure, conductive carbon black (S.P), and a binder (polyvinylidene fluoride (PVDF)) were added to N-methylpyrrolidone (NMP) in a weight ratio of 94:3:3 (the weight ratio of the positive electrode material to NMP was 2.1:1). The mixture was uniformly mixed under stirring to form a uniform slurry. The slurry was applied to an aluminum foil current collector, dried, and compressed to obtain an electrode plate.

Preparation of a negative electrode: Artificial graphite for a negative electrode, conductive carbon black (S.P), carboxymethyl cellulose (CMC), and an adhesive (SBR) were added to sufficient pure water in a weight ratio of 95:1:1:3. The mixture was mixed under stirring to form a uniform slurry. The slurry was applied to a copper foil current collector, dried, and compressed to obtain an electrode plate.

The separator is a PP/PE/PP three-layer composite film material.

The positive and negative electrode plates after compression were spot-welded with tabs. After inserting the separator, the electrode plates with the tabs were wound on a winding machine, and then loaded into a soft package fixture. The soft package fixture was sealed at the top and the sides, and then put into an oven for baking. Subsequently, 9 g of electrolytic solution was injected in an environment with a relative humidity of less than 1.5%. After the electrolytic solution injection, formation was performed for 48 h (LIP-3AHB06 high-constant-temperature formation system from Zhejiang HangKe Technology Inc.), and then vacuum sealing was performed.

The sample drying and the battery high-temperature test were performed using the KPBAK-03E-02 high-efficiency vacuum drying oven from Dongguan Kerui Machinery and Electronics Co., Ltd.

The charging and discharging test of the lithium-ion secondary battery prepared by the present disclosure was performed on a battery tester from Wuhan Land Electronics Co., Ltd. (CT2001C test device, Wuhan Land Electronics Co., Ltd.) according to the test method of GB/T18287-2000. Different battery systems had a great influence on the cycle retention rate of the material. The battery system used in the experiment was the most common evaluation system.

Specifically, a 1 mol/L lithium hexafluorophosphate solution was used as an electrolytic solution, where a solvent in the lithium hexafluorophosphate solution was a mixed solvent with a mass ratio of dimethyl carbonate (DMC):ethylene carbonate (EC):diethyl carbonate (DEC) of 1:1:1. A mixture of artificial graphite, conductive carbon black, carboxymethyl cellulose, and an adhesive in a weight ratio of 95:1:1:3 was used as a negative electrode material. The model number of the battery cell was 454261. In this way, actual defects of the positive electrode material were exposed as soon as possible, and the performance of the positive electrode material was determined.

**Example 1**

$LiNi_{0.5}Co_{0.2}Mn_{0.3}O_2$ was selected as a matrix material. Corresponding amounts of carbon-coated LLZO and boric acid were weighed and added to the matrix in a mass ratio of the matrix material: carbon-coated LLZO:boric acid of 1.0:0.01:0.008. The mixture was ball-milled at a rotation speed of 40 HZ for 10 min. The uniformly mixed material was put into a muffle furnace, heated to 450 °C at a heating rate of 5 °C/min, and then sintered for 6 h under air atmosphere. The sintered material was cooled to room temperature, and then sieved through a 300-mesh metal mesh to obtain a positive electrode material 1.
The positive electrode material 1 was subjected to particle size, specific surface area, free lithium, and battery tests. The data are shown in Table 2.

**Example 2**

$LiNi_{0.6}Co_{0.1}Mn_{0.3}O_2$ was selected as a matrix material. Corresponding amounts of carbon-coated LATP and boric acid were weighed and added to the matrix in a mass ratio of the matrix material:carbon-coated LATP:boric acid of 1.0:0.02:0.01. The mixture was ball-milled at a rotation speed of 40 HZ for 10 min. The uniformly mixed material was put into a muffle furnace, heated to 410 °C at a heating rate of 5 °C/min, and then sintered for 6 h under air atmosphere. The sintered material was cooled to room temperature, and then sieved through a 300-mesh metal mesh to obtain a positive electrode material 2.
The positive electrode material 2 was subjected to particle size, specific surface area, free lithium, and battery tests. The data are shown in Table 2.

**Example 3**

$LiNi_{0.7}Co_{0.1}Mn_{0.2}O_2$ was selected as a matrix material. Corresponding amounts of carbon-coated LATP and boric acid were weighed and added to the matrix in a mass ratio of the matrix material:carbon-coated LLZO:boric acid of 1.0:0.005:0.007. The mixture was ball-milled at a rotation speed of 40 HZ for 10 min. The uniformly mixed material was put into a muffle furnace, heated to 370 °C at a heating rate of 5 °C/min, and then sintered for 6 h under air atmosphere. The sintered material was cooled to room temperature, and then sieved through a 300-mesh metal mesh to obtain a positive electrode material 3.
The positive electrode material 3 was subjected to particle size, specific surface area, free lithium, and battery tests. The data are shown in Table 2.

**Example 4**

$LiNi_{0.83}Co_{0.07}Mn_{0.1}O_2$ was selected as a matrix material. Corresponding amounts of carbon-coated LATP and boric acid were weighed and added to the matrix in a mass ratio of the matrix material:carbon-coated LATP:boric acid of 1.0:0.001:0.008. The mixture was ball-milled at a rotation speed of 40 HZ for 10 min. The uniformly mixed material was put into a muffle furnace, heated to 320 °C at a heating rate of 5 °C/min, and then sintered for 6 h under air atmosphere. The sintered material was cooled to room temperature, and then sieved through a 300-mesh metal mesh to obtain a positive electrode material 4.
The positive electrode material 4 was subjected to particle size, specific surface area, free lithium, and battery tests. The data are shown in Table 2.

**Example 5**

$LiNi_{0.92}Co_{0.05}Mn_{0.03}O_2$ was selected as a matrix material. Corresponding amounts of carbon-coated LATP and boric acid were weighed and added to the matrix in a mass ratio of the matrix material:carbon-coated LATP:boric acid of 1.0:0.008:0.006. The mixture was ball-milled at a rotation speed of 40 HZ for 10 min. The uniformly mixed material was put into a muffle furnace, heated to 250 °C at a heating rate of 5 °C/min, and then sintered for 6 h under air atmosphere. The sintered material was cooled to room temperature, and then sieved through a 300-mesh metal mesh to obtain a positive electrode material 5.

The positive electrode material 5 was subjected to particle size, specific surface area, free lithium, and battery tests. The data are shown in Table 2.

**Comparative Example 1**

$LiNi_{0.6}Co_{0.1}Mn_{0.3}O_2$ was selected as a matrix material. A corresponding amount of LATP was weighed and added to the matrix in a mass ratio of the matrix material:LATP of 1.0:0.02. The mixture was ball-milled at a rotation speed of 40 HZ for 10 min. The uniformly mixed material was put into a muffle furnace, heated to 400 °C at a heating rate of 5 °C/min, and then sintered for 6 h under air atmosphere. The sintered material was cooled to room temperature, and then sieved through a 300-mesh metal mesh to obtain a comparative positive electrode material D1.

The comparative positive electrode material D1 was subjected to particle size, specific surface area, free lithium, and battery tests. The data are shown in Table 2.

Table 2. Characterization of positive electrode materials acquired in examples

| Examples | Specific surface area (m²/g) | Particle size | Free lithium | Capacity retention rate (%) | Thickness (%) | Resistivity | DSC |
| --- | --- | --- | --- | --- | --- | --- | --- |
| | | D50 (μm) | Total free lithium (ppm) | 4.3 V 45 °C @ 300 cycles | 4.3 V 70 °C 30 days | Ω·cm | Peak temperature °C |
| 1 | 0.62 | 4.6 | 0.0213 | 99 | 8 | 18920 | 305 |
| 2 | 0.75 | 3.9 | 0.0415 | 98 | 12 | 11200 | 296 |
| 3 | 0.78 | 4.4 | 0.0497 | 90 | 18 | 4320 | 285 |
| 4 | 0.82 | 3.8 | 0.0515 | 88 | 28 | 1092 | 279 |
| 5 | 0.95 | 3.6 | 0.1217 | 81 | 38 | 492 | 271 |
| D1 | 0.84 | 3.7 | 0.1071 | 95 | 17 | 128291 | 286 |

In Table 2, the positive electrode materials prepared in the examples of the present disclosure have less than 1500 ppm of total free lithium, a specific surface area of 0.6-1.0 m²/g, and a particle size of 3.0-5.0 μm.

At present, the safety problem of lithium batteries frequently occurs. Side reactions of the electrolytic solution remain the main reason, and solid-state batteries cannot be commercialized in the near future. Therefore, the interface of the positive electrode material needs to be improved. The coatings, including metal oxide coating, anionic salt coating, and the like, may reduce the ionic conductivity of the positive electrode material to some extent. In order not to reduce the ionic conductivity while coating, fast-ionic conductors are only used as coating agents, which is highly favored by researchers. However, the fast-ionic conductor coating may reduce the electronic conductivity of the positive electrode material. To solve the above problems, according to the present disclosure, a fast-ionic conductor modified through carbon coating is used to modify a positive electrode material, such that the ionic conductivity and the electronic conductivity of the positive electrode material are synchronously improved. In addition, the surface of the carbon-coated fast-ionic conductor is coated with boric acid due to the glassy property, such that the escape of carbon in the carbon-coated fast-ionic conductor is effectively prevented.

As can be seen from Table 2, in the examples, when the Ni molar fraction was 0.6, compared with the case of using only the fast-ionic conductor, the carbon-coated fast-ionic conductor increased the DSC peak of the positive electrode material by about 10 °C, and reduced the powder resistivity by an order of magnitude, thereby significantly improving the electronic conductivity and safety.

In conclusion, according to the positive electrode material of the present disclosure, the ionic conductivity and the electronic conductivity of the positive electrode material are synchronously improved, and the safety of the battery is improved.

**Claims**

1. A carbon-coated fast-ionic conductor-modified positive electrode material, having a chemical general formula of $Li_aNi_xCo_yMn_zO_2 \cdot cA \cdot dB$, wherein $1.00 \leq a \leq 1.20$, $0.00 < c \leq 0.01$, $0.00 < d \leq 0.02$, $0.00 \leq x < 1.00$, $0.00 \leq y < 0.2$, $0.00 \leq z$

< 0.4, and x + y + z = 1; A is a first coating material, and B is a second coating material; and the first coating material A is a carbon-coated fast-ionic conductor, and the second coating material B is a carbon escape-prevention compound.

2. The carbon-coated fast-ionic conductor-modified positive electrode material according to claim 1, wherein the carbon escape-prevention compound is in a glass state, a molten state, or a liquid state at 250-450 °C and is in a solid state at room temperature.

3. The carbon-coated fast-ionic conductor-modified positive electrode material according to claim 2, wherein the carbon escape-prevention compound is boric acid.

4. The carbon-coated fast-ionic conductor-modified positive electrode material according to claim 1, wherein the fast-ionic conductor is LATP or LLZO.

5. The carbon-coated fast-ionic conductor-modified positive electrode material according to any one of claims 1 to 4, wherein the positive electrode material comprises less than 1500 ppm by mass of total free lithium.

6. The carbon-coated fast-ionic conductor-modified positive electrode material according to claim 5, wherein the carbon-coated fast-ionic conductor-modified positive electrode material has a specific surface area of 0.5-1.2 $m^2$/g.

7. The carbon-coated fast-ionic conductor-modified positive electrode material according to claim 6, wherein the carbon-coated fast-ionic conductor-modified positive electrode material has an average particle size of 2-5 $\mu$m.

8. A positive electrode material for a lithium-ion battery, wherein the positive electrode material for a lithium-ion battery comprises the carbon-coated fast-ionic conductor-modified positive electrode material according to any one of claims 1 to 7.

9. A lithium-ion battery, comprising the positive electrode material for a lithium-ion battery according to claim 8.

10. An electric device, comprising the lithium-ion battery according to claim 9, wherein the lithium-ion battery is used to provide electric energy.

11. A preparation method for a carbon-coated fast-ionic conductor-modified positive electrode material, comprising the following steps:

   step 1: mixing a ternary positive electrode material, a carbon-coated fast-ionic conductor, and a carbon escape-prevention compound in a mass ratio of 1.0:(0.001-0.02):(0.006-0.01), and then subjecting the mixture to ball milling; and
   step 2: putting the ball-milled material into a muffle furnace, and heating the material to 250-450 °C at a heating rate of 5 °C/min and then sintering the material for 6 h under air atmosphere, thereby obtaining the carbon-coated fast-ionic conductor-modified positive electrode material.

12. The carbon-coated fast-ionic conductor-modified positive electrode material according to claim 11, wherein the carbon escape-prevention compound is boric acid.

FIG. 1

FIG. 2

# EUROPEAN SEARCH REPORT

**Application Number**

EP 25 20 1934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/058925 A1 (SONG YUMI [KR] ET AL) 20 February 2020 (2020-02-20) * claim 13 * | 1-12 | INV. H01M4/36 H01M4/505 H01M4/525 |
| A | US 11 909 043 B2 (SAMSUNG SDI CO LTD [KR]) 20 February 2024 (2024-02-20) * claims 1, 4 * * preparation example 1 * | 1-12 | H01M4/62 H01M10/0525 |
| A | NEFEDOVA K V ET AL: "The Effect of the Lithium Borate Surface Layer on the Electrochemical Properties of the Lithium-Ion Battery Positive Electrode Material LiNi1/3Mn1/3Co1/3O2", RUSSIAN JOURNAL OF ELECTROCHEMISTRY, MAIK NAUKA/INTERPERIODICA PUBLISHING, MOSCOW, RU, vol. 57, no. 11, 1 November 2021 (2021-11-01), pages 1055-1069, XP037637659, ISSN: 1023-1935, DOI: 10.1134/S1023193521100104 [retrieved on 2021-12-07] * abstract * | 1-12 | |
| A | CN 108 878 828 A (ZHEJIANG TIANNENG ENERGY TECH) 23 November 2018 (2018-11-23) * paragraphs [0009] - [0011], [0027] - [0029] * | 1-12 | |

**TECHNICAL FIELDS SEARCHED (IPC)**

H01M

The present search report has been drawn up for all claims

| Place of search | Date of completion of the search | Examiner |
|---|---|---|
| Munich | 19 January 2026 | Gregori, Giuliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 1934

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | | Publication date | Patent family member(s) | | Publication date |
|---|---|---|---|---|---|
| US 2020058925 | A1 | 20-02-2020 | KR | 20180062237 A | 08-06-2018 |
| | | | US | 2018151865 A1 | 31-05-2018 |
| | | | US | 2020058925 A1 | 20-02-2020 |
| US 11909043 | B2 | 20-02-2024 | JP | 7130911 B2 | 06-09-2022 |
| | | | JP | 2021141064 A | 16-09-2021 |
| | | | KR | 20210111950 A | 14-09-2021 |
| | | | US | 2021280865 A1 | 09-09-2021 |
| CN 108878828 | A | 23-11-2018 | NONE | | |

EPO FORM P0459

For more details about this annex : see Official Journal of the European Patent Office, No. 12/82